# NEUE EUROPÄISCHE PATENTSCHRIFT

(11) **EP 1 861 290 B2**
(45) Veröffentlichungstag und Bekanntmachung des Hinweises auf die Entscheidung über den Einspruch: **24.06.2015**
(45) Hinweis auf die Patenterteilung: 11.05.2011
(21) Anmeldenummer: 06723006.0
(22) Anmeldetag: 07.02.2006
(51) Int. Cl.: B60R 13/08, F16L 59/02, G10K 11/168, B32B 3/28

(54) **ABSCHIRMELEMENT FÜR KRAFTFAHRZEUGE**
SHIELDING ELEMENT FOR MOTOR VEHICLES
ELEMENT DE PROTECTION POUR VEHICULES AUTOMOBILES

(30) Priorität: 22.03.2005 DE 102005013311
(43) Veröffentlichungstag der Anmeldung: 05.12.2007
(73) Patentinhaber: Federal-Mogul Sealing Systems GmbH, 57562 Herdorf (DE)
(72) Erfinder: KRUS, Ralf, D-51789 Lindlar (DE); PAULUS, Joachim, D-40489 Düsseldorf (DE)
(74) Vertreter: Becker Kurig Straus
(86) Internationale Anmeldenummer: PCT/EP2006/001055
(87) Internationale Veröffentlichungsnummer: WO 2006/099913

(56) Entgegenhaltungen:
- EP-A- 0 917 507
- EP-A- 1 459 939
- DE-A1- 10 246 998
- DE-A1- 19 849 366
- JP-A- S5 617 313
- US-B1- 6 276 044
- PATENT ABSTRACTS OF JAPAN Bd. 2000, Nr. 05, 14. September 2000 (2000-09-14) & JP 2000 034938 A (MITSUBISHI MOTORS CORP), 2. Februar 2000 (2000-02-02)

## Beschreibung

### GEBIET DER ERFINDUNG

Die vorliegende Erfindung bezieht sich auf ein Abschirmelement, insbesondere bezieht sich die vorliegende Erfindung auf ein Abschirmelement für Kraftfahrzeuge mit einem Durchführungselement zur Wärme-, Schall- und Schwingungsdämmung.

### STAND DER TECHNIK

Heutzutage gibt es viele Anwendungen für Abschirmelemente. Spezielle Anwendungen von Abschirmelementen findet man insbesondere in der AutomobilIndustrie, wo Abschirmelemente als Hitzeschilder eingesetzt werden, um beispielsweise Passagiere oder Bauteile vor im Motor erzeugter Wärme und Schwingungen zu schützen.

Für derartige Anwendungen müssen die Abschirmelemente fest und starr genug sein, um bei hohen Belastungen ihre Form zu erhalten und darüber hinaus Passagiere von einem wesentlichen Teil der erzeugten Wärme und Schwingung zu schützen.

Die Verwendung eines einfachen Metallblattes, wie beispielsweise aus Aluminium oder aus einer Legierung, reicht dabei oft nicht aus, da ein derartiges Metallblatt zwar Infrarotstrahlung und die Konvektion reduzieren kann, jedoch weist es beispielsweise zu geringe akustische Dämmungseigenschaften auf.

Desweiteren weisen die im Stand der Technik erwähnten Abschirmelemente die ungünstige Eigenschaft auf, dass sie Wärmestrahlung, Schallwellen und Schwingungen, welche vom Abschirmelement aufgenommen werden, beispielsweise an die Befestigungspunkte der Karosserie weiterleiten und somit letztendlich auf die Karosserie des Fahrzeuges übertragen, wodurch Passagiere und wärmeempfindliche Teile des Fahrzeuges nicht mehr optimal geschützt sind.

Ein derartiges Abschirmelement wird beispielsweise in der EP 0 917 507 B1 offenbart. Dabei wird ein Verfahren zum Herstellen einer wärmedämmenden Verbundplatte offenbart. Die Aufgabe der Begrenzung der Wärme-, Schall- und Schwingung-Weiterleitung an die die Verbundplatte umgebenden Bauteile wird dabei allerdings nicht behandelt.

Auch die DE 43 29 411 C2 beschäftigt sich mit einem Wärme-, Schall- und Schwingungsdämmungs-Material sowie einem Verfahren für dessen Herstellung. Dabei wird ein Wärme-, Schall- und Schwingungsdämmungs-Material offenbarf, welches aus mehreren aufeinander liegenden profilierten Folien aus Nichteisenmetall, insbesondere Aluminium, besteht.
Die JP 4-71733 beschreibt ein Abschirmelement gemäss dem Oberbegriff des Anspruchs 1.

Das Material ist als Industrie-Isolierung sowie als Hitzeschutzschild im Kraftfahrzeug- und Waggonbau einsetzbar. Das Problem der hinreichenden Eindämmung der Wärme-, Schallund Schwingung-Weiterleitung an die die Verbundplatte umgebenden Bauteile wird auch dabei nicht gelöst.

### ZUSAMMENFASSUNG DER ERFINDUNG

Aufgabe der vorliegenden Erfindung ist es daher, ein Abschirmelement bzw. Hitzeschild für Kraftfahrzeuge bereitzustellen, welches eine ausreichende Wärme-, Schall- und Schwingungsdämmung aufweist, kostengünstig und ohne manuelle Arbeitsgänge hergestellt und einfach montiert werden kann und welches darüber hinaus an den Befestigungspunkten des Abschirmelements eine Wärme-, Schall- und Schwingungsübertragung von heißen, lauten und schwingenden Bauteilen im Motorraum oder Unterbodenbereich verhindert.

Diese Aufgabe wird erfindunfsgemäß von einem Abschirmelement mit den Merkmalen des Anspruchs 1 gelöst.

Im Bereich der äußeren Lagen des Abschirmelements dervorliegenden Erfindungwerden die Öffnungen bevorzugtgrößerausgeschnitten als die Öffnung der inneren Einlage, deren koaxiale Öffnungen anschließend eine gemeinsame Durchführung bilden, in der ein Durchführungselement aufgenommen bzw. gelagert ist.

Durch die unterschiedliche Größe der Öffnungen kommt es somit zu keiner Berührung des Durchführungselements mit den äußeren Lagen des Abschirmelements und somit zu einer Wärme- und Schall- bzw. Schwingungsentkopplung.

Ein Vorteil dervorliegenden Erfindung liegt darin, dass sich durch die Einlage die Möglichkeit ergibt, ein ein- oder mehrteiliges metallisches Durchführungselement im Bereich der Durchführung der Einlage lose anzubringen, ohne dabei mit den äußeren Lagen des Abschirmelements in Kontakt zu kommen.

Mit dem aufgenommenen bzw. gelagerten Durchführungselement kann das Abschirmelement der vorliegenden Erfindung in der Nähe eines heißen Bauteils des Karosseriebereichs verschraubt oder auf andere Weise befestigt werden.

Ein Vorteil der vorliegenden Erfindung liegt darin, dass die Übertragung von Temperatur, Schall und Schwingungen des heißen Bauteils auf das Abschirmelement durch die Öffnungen in den äußeren Lagen hindurch verhindert wird, da das Abschirmelement an der Einlage samt aufgenommenem Befestigungs-Mittel hängt.

Gemäß einer ersten Ausführungsform der vorliegenden Erfindung können die Öffnungen der äußeren Lagen unterschiedlich groß sein und/oder auch unterschiedliche Formen aufweisen.

Dadurch ergibt sich die Möglichkeit, das Schwingverhalten des Abschirmelements entsprechend gezielt zu beeinflussen und einzustellen.

Damit ergibt sich der Vorteil, dass die Wärmeübertragung vom Hitzeschild zum Befestigungspunktbeeinflusst werden kann und ebenso das Schwingungsverhalten des Abschirmelements angepasst werden kann.

Ein weiterer Punkt betrifft die Verpressung des ein- oder mehrteiligen Durchführungselements der vorliegenden Erfindung mit der zwischen den äußeren Lagen angeordneten Einlage. Diese Verpressung des ein- oder mehrteiligen Durchführungselements in Richtung auf die Einlage kann unterschiedlich stark ausgeführt sein, in einer losen Verpressung.

Hingegen kann sich bei einer losen Verpressung des Durchführungselements mit der Einlage, die Einlage bei der Wärmeausdehnung des heißen Bauteils zusätzlich noch in dem Durchführungselement bewegen bevor die Einlage den restlichen Längenausgleich übernimmt.

Der Luftspalt zwischen dem ein- oder mehrteiligen Durchführungselement und der Einlage ist somit individuell einstellbar und je nach Anwendungsfall zu wählen.

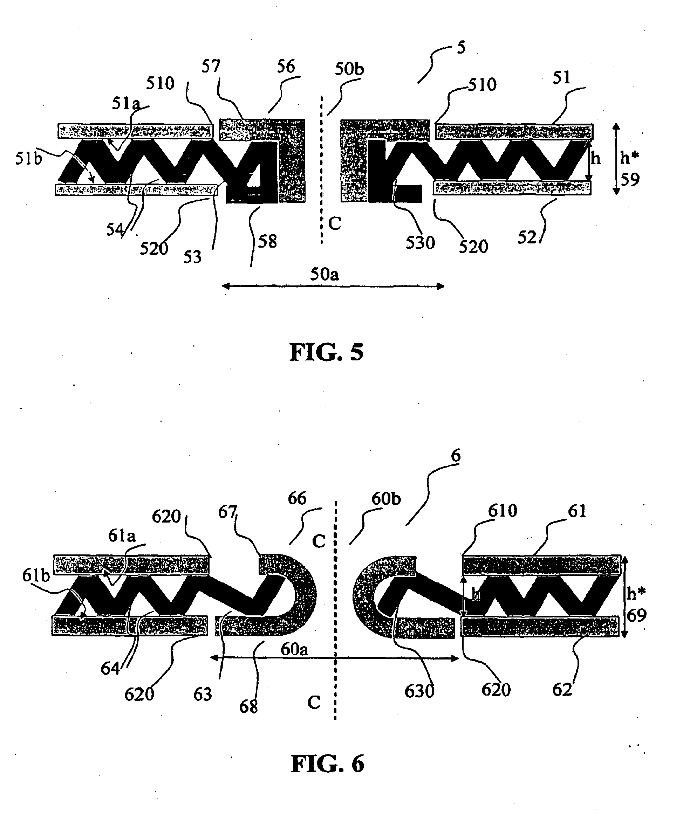

Ein weiterer Vorteil der Erfindung liegt darin, dass aufgrund des variablen Stärkegrades der Verpressung des Durchführungselementes mit der Einlage, entsprechende Justierungen bei der späteren Montage des Hitzeschildes durchgeführt werden können, da das Durchführungselement beispielsweise um eine Achse C (siehe Figuren 5-7) frei drehbar oder longitudinal verschiebar ist.

Gemäß einer weiteren Ausführungsform der vorliegenden Erfindung weist das Abschirmelement einen Kragen im Bereich der Öffnungen der äußeren Lagen auf, welcherdie äußeren Lagen und die Einlage besser verbindet.

Weiter wird in der vorliegenden Erfindung bevorzugt, dass die Einlage ein Streckmetall ist, welches ein regelmäßiges Maschenwerk und/oder eine definierte Vorspannung aufweist, wobei von dieser Vorspannung die entsprechende Wärme-, Schall- und/oder Schwingungsübertragung abhängig ist.

Darüber hinaus kann die Maschengröße der Einlage unterschiedliche Größen aufweisen.

Weiter ist bevorzugt, dass die Einlage ein isoliertes Gitter ist.

Gemäß einer weiteren Ausführungsform der vorliegenden Erfindung wird bevorzugt, dass die äußeren Lagen, mit der mindestens einen dazwischen angeordneten Einlage, miteinander verbunden sind, indem jede Lage in eine Mehrzahl von im Wesentlichen parallelen, aufwärtsstehenden sich in eine erste Richtung (A) erstreckende Rippen, die durch Vertiefungen getrennt sind, geformt ist, wobei die Vertiefungen jeder Lage in den Rippen der anderen Lage aufgenommen sind, wobei die Vertiefungen einspringende Seitenwände aufweisen und die Rippen in der Breite entlang ihrer Länge variieren und wobei sich Wellungen in eine zweite Richtung (B) erstrecken, die um einen Winkel von wenigstens 10° zu der ersten Richtung (A) geneigt sind, und wobei die Wellungen in der Breite entlang ihrer Länge im Wesentlichen konstant sind.

Gemäß einem weiteren Aspekt der vorliegenden Erfindung wird bevorzugt, dass die mindestens zwei beabstandeten Lagen in Wirkverbindung miteinander verbunden sein können und die Oberflächen der Lagen eine beliebige räumliche und flächenförmige Ausformung aufweisen können.

Darüber hinaus bevorzugt die vorliegenden Erfindung, dass das Durchführungselement einteilig oder mehrteilig ist.

Weiter ist es bevorzugt, dass das Durchführungselement zweiteilig ist.

Ferner ist es bevorzugt, dass das Durchführungselement eine Niet (Niete) ist.

Darüber hinaus ist das Durchführungselement mit radialem Spiel mit der Einlage verbunden, so dass es um eine Achse C drehbar gelagert ist.

Darüber hinaus ist es bevorzugt, dass das Durchführungselement auf der der ersten äußeren Lage zugewandten Seite einen kreisförmigen Querschnitt mit einem Durchmesser aufweist, welcher von 10 mm bis25 mm reicht.

Weiter ist bevorzugt, dass das Durchführungselement auf der der zweiten äußeren Lage zugewandten Seite einen kreisförmigen Querschnitt mit einem Durchmesser aufweist, welcher von 10 mm bis 25 mm reicht.

Weiteristbevorzugt,dassderDurchmesserder Öffnung des Durchführungselements zwischen 5 mm und 15 beträgt.

Weiter ist bevorzugt, dass das Durchführungselement eine Materialstärke zwischen 1.0 und 6.0 mm aufweist.

Weiter ist bevorzugt, dass das mehrteilige Durchführungselement in der gemeinsamen Durchführung eine Tiefe im Bereich zwischen 0.5 mm und 2.5 mm aufweist.

Weiter ist bevorzugt, dass das Durchführungselement in der Durchführung im Wesentlichen gelöst bzw. unfixiert gelagert ist.

Weiter ist bevorzugt, dass ein Kragen den Rand der Öffnungen der äußeren Lagen fixiert umgibt.

Weiter ist bevorzugt, dass die Einlage aus Aluminium, Metall, Edelstahl, und/oder Al-beschichteten Edelstahl oder deren Kombinationen besteht. Die Einlage kann auch mit einer Beschichtung auf Kunststoffbasis versehen sein.

Gemäß einem weiteren Aspekt der vorliegenden Erfindung wird bevorzugt, dass die Einlage, welche sich im Zwischenbereich zwischen der Öffnung der mindestens zwei äußeren Lagen und der Öffnung der Einlage befindet, im Wesentlichen parallel zu den Stirnflächen der äußeren übereinander liegenden Lagen ist.

Gemäß einem weiteren Aspekt der vorliegenden Erfindung wird bevorzugt, dass die Fläche, welche die Einlage zwischen den äußeren Lagen einnimmt, größer als die Fläche der Durchführung der Öffnungen der äußeren Lagen ist.

Gemäß einer weiteren Ausführungsform der vorliegenden Erfindung ist es bevorzugt, dass der Winkel zwischen der Richtung der Rippen und der Richtung der Wellungen zwischen 1° und 90° liegt, bevorzugt im Wesentlichen 90° beträgt.

Weiter ist es bevorzugt, dass die mindestens eine Durchführung der mindestens zwei beabstandeten äußeren Lagen des Abschirmelements beliebig ausgeformt ist, bevorzugt kreisförmig ausgeformt ist.

Es ist bevorzugt, dass sich das Durchführungselement aus einer beliebigen mechanischen Verbindung, wie einem ein- oder mehrteiligen Durchführungselement zusammensetzt, bevorzugt aus einem ein- oder mehrteiligen Niet (Niete) zusammensetzt ist.

Des weiteren wird bevorzugt, dass das Durchführungselement als ein Verpressungsbegrenzer wirkt, um die Geometrie der Einlage nicht zu deformieren.

Gemäß einem weiteren Aspekt der vorliegenden Erfindung wird bevorzugt, dass das mehrteilige Durchführungselement aus zwei Teilen besteht, einem oberen Teil und einem unteren Teil, wobei die Teile derart ausgeformt sind, dass sie durch eine Öffnung der Einlage miteinander verpresst werden können und dadurch die Öffnung der Einlage umgeben. Somit läßt sich eine gewünschte Wärme-, Schall- und Schwingungsdämmung erzielen.

Es wird weiter bevorzugt, dass oberer und unterer Teil des mehrteiligen Durchführungselements aus dem gleichen oder unterschiedlichem Material bestehen, welches aus der Gruppe von Aluminiumblech, Edelmetall, Edelstahl und Al-beschichtetem Stahl stammt.

Bevorzugt ist weiterhin, dass oberer und unterer Teil des mehrteiligen Durchführungselements die gleichen oder unterschiedliche Materialstärken aufweisen.

Weiter wird bevorzugt, dass die Materialstärke des einteiligen Durchführungselements räumlich variieren kann, bevorzugt aber eine konstante Materialstärke aufweist.

Es wird weiter bevorzugt, dass das einteilige Durchführungselement eine beliebige Form aufweisen kann.

Es wird weiter bevorzugt, dass das mehrteilige Durchführungselement eine beliebige Form aufweisen kann.

Es wird weiter bevorzugt, dass der obere und untere Teil des mehrteiligen Durchführungselements im Wesentlichen identisch ausgeformt sind.

Eine weitere Ausführungsform bevorzugt, dass sich die mindestens zwei äußeren Lagen des Abschirmelements und das mindestens eine Durchführungselement gegenseitig nicht berühren.

Es wird gemäß einem weiteren Aspekt der vorliegenden Erfindung bevorzugt, dass sich das Durchführungselement und die Einlage in einem Flächenabschnitt des Durchführungselements gegenseitig mehr oder weniger flächig berühren.

Desweiteren wird bevorzugt, dass die Öffnung der Einlage einen kreisförmigen Querschnitt aufweist.

Es wird bevorzugt, dass der die Öffnung der äußeren Lagen lose umgebende Kragen kreisförmig ausgeformt ist.

Es wird bevorzugt, dass der die Durchführung lose umgebende Kragen ein- oder mehrteilig ist.

Es wird weiter bevorzugt, dass sich das Durchführungselement bevorzugt zentriert um die Öffnung der Einlage des Abschirmelements befindet.

Es wird bevorzugt, dass das Durchführungselement eine Öffnung mit einem kreisförmigen Querschnitt aufweist.

Die vorliegende Erfindung bevorzugt, dass die übereinander-liegenden äußeren Lagen mehrere Lagen umfassen können, welche metallisches Material umfassen, bevorzugt Aluminiumblech, Edelmetall, Edelstahl, Al-beschichteten Stahl oder deren Kombinationen.

Es wird bevorzugt, dass bei mehr als einer Einlage, die einzelnen Einlagen Aluminium, Edelmetall, Edelstahl, Al-beschichteten Stahl oder deren Kombinationen umfassen können.

Es wird bevorzugt, dass die mindestens eine Einlage eine Maschengröße von vorbestimmter Größe aufweist.

Es wird bevorzugt, dass die mindestens zwei äußeren Lagen des Abschirmelements zumindestens Einlagen-seitig mit glatten Stirnseiten versehen sind.

Gemäß einer weiteren Ausführungsform der vorliegenden Erfindung wird bevorzugt, dass die Rippen der äußeren Lagen des Abschirmelements in der Breite in einer regelmäßigen Weise variieren.

Es wird bevorzugt, dass die Rippen der äußeren Lagen des Abschirmelements in der Höhe entlang der Länge der Rippe variieren, wobei die größte Höhe an den engsten bzw. schmalsten Punkten der Rippe auftreten.

Eine weitere Ausführungsform bevorzugt, dass mehrere Lagen einer wärmeisolierenden oder schall- und schwingungsdämmenden Einlage, die ein gitterförmiges Streckmetall bevorzugt ein Gitter sein kann, zwischen den mindestens zwei äußeren Lagen des Abschirmelements eingeschlossen ist.

Es ist weiter bevorzugt, dass die Verbindung der übereinanderliegenden äußeren Lagen durch zumindest partielles Umbördeln von Randbereichen mindestens einer der metallischen äußeren Lagen herbeiführbar ist.

Es wird bevorzugt, dass das Abschirmelement in einem Hitzeschild aufgenommen ist.

Gemäß einem weiteren Aspekt der vorliegenden Erfindung ist es bevorzugt, dass das Abschirmelement durch die mindestens eine Öffnung des Durchführungselements mit einem weiteren Bauteil im Karosserieraum, etc. verbunden werden kann.

Weiter ist es bevorzugt, dass das Abschirmelement als Hitzeschild und/oder Schwingungschutzelement einsetzbar ist.

Es ist bevorzugt, dass entweder die Vorder- und/oder die Rückseite des Abschirmelements auf die Hitzequelle(n) und/oder Schwingungquelle(n) gerichtet ist.

Es ist weiter bevorzugt, dass eine oder mehrere nebeneinander geordnete und/oder übereinandergeordnete Abschirmelemente mit den Vorder- und/oder Rückseiten auf die Hitzequelle(n) und/oderSchwingungquelle (n) gerichtet sind.

Abschließend ist es bevorzugt, dass das Abschirmelement als Werkstoff für beliebige weitere Anwendungen eingesetzt werden kann.

Weitere Vorteile, Merkmale und Anwendüngsmöglichkeiten der vorliegenden Erfindung ergeben sich aus der nachfolgenden Beschreibung von bevorzugten Ausführungsformen in Verbindung mit der Zeichnung.

### KURZE BESCHREIBUNG DER ZEICHNUNG

FIG 1. zeigt eine schematische Querschnittsansicht einer Ausführungsform eines als Hitzeschild ausgebildeten Abschirmelements gemäß der Erfindung ohne integriertem Temperatur- und Schwingungsentkoppelelement.
FIG. 2 zeigt eine Draufsicht einer Ausführungsform einer Einlage gemäß der Erfindung.
FIG. 3 zeigt eine Draufsicht einer Ausführungsform eines Abschirmelements gemäß dem Stand der Technik.
FIG. 4 stellt eine Draufsicht einer Ausführungsform eines Abschirmelements mit Durchführungseiement gemäß der vorliegenden Erfindung dar.
FIG. 4A zeigt einen schematischen Querschnitt durch ein zweiteiliges Durchführungselement gemäß der vorliegenden Erfindung.
FIG. 4B zeigt einen schematischen Querschnitt durch ein einteiliges Durchführungselement gemäß der vorliegenden Erfindung.
FIG. 5 stellt eine schematische Seitenansicht einer Ausführungsform mit einem Durchführungselement gemäß der vorliegenden Erfindung dar.
FIG. 6 stellt eine schematische Seitendarstellung mit einem Durchführungselement einer weiteren Aus-führungsform gemäß der vorliegenden Erfindung dar.
FIG 7 stellt eine schematische Seitenansicht einer Ausführungsform gemäß der vorliegenden Erfindung mit einem Durchführungselement dar, wobei das Abschirmelementbeispielsweise im Karosseriebereich befestigt ist.

### AUSFÜHRLICHE BESCHREIBUNG DER ZEICHNUNG

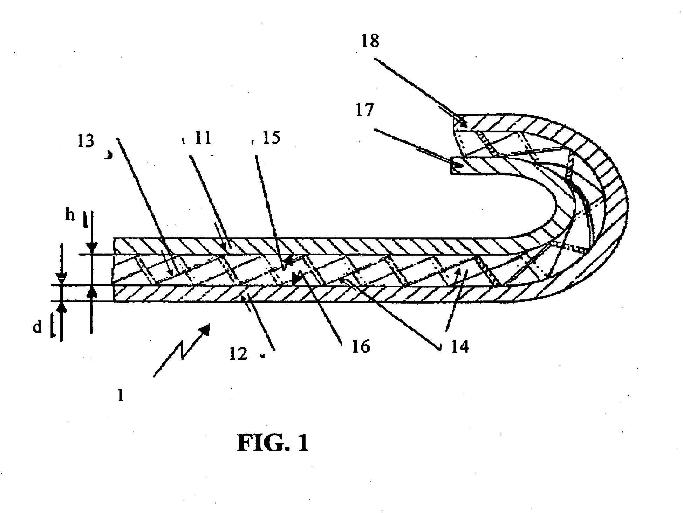

Die FIG. 1 zeigt eine Querschnittsansicht eines als Hitzeschild ausgebildeten Abschirmelements 1 ohne koaxialen Öffnungen und ohne Durchführungselement.

Eine derartiges Abschirmelement kann beispielsweise am Abgasstrang oder im Karosserieoder Motorbereich eines Kraftfahrzeuges eingesetzt werden.

Das dargestellte Abschirmelement umfasst dabei zwei äußere Lagen 11 und 12 mit im Wesentlichen gleicher Materialstärke, wobei sich zwischen den äußeren Lagen 11 und 12 eine Lage einer Einlage 13 erstreckt, welche je nach Anwendungsfall ein gitterförmiges Streckmetall mit definierter Vorspannung sein kann.

Die einzelnen Kammern 14 der Einlage 13 bilden zwischen den glatten Stirnflächen 15 und 16 der äußeren Lagen 11 und 12 entsprechende Luftpolster, wobei die Luftpolstermenge durch Variation des Abstandes h der beiden Stirnflächen 15 und 16 variiert werden kann.

Diese Luftpolster bewirken eine mehr oder wenigeroptimale Wärme-und/oderSchallund/oder Schwingungsdämmung zwischen entsprechend warmen und/ oder lauten und/oder schwingenden Bereichen im Karosseriebereich und entsprechend wenigerwarmen und/ oder weniger lauten und/oder weniger schwingenden Bereichen im Karosseriebereich.

Die Endbereiche 17 und 18 der äußeren Lagen 11 und 12 des Abschirmelements 1 werden durch entsprechendes Umbördeln miteinander verbunden.

Allerdings kommt es beim Befestigen des Abschirmelements 1 an warmen und/oder und/oder lauten und/oder schwingenden Bereichen im Kraftfahrzeugs zu unerwünschter Wärmeleitung, sowie Schall- und Schwingungsübertragung vom Abschirmelement 1 auf die das Abschirmelement 1 umgebenden Befestigungsmittel und damit auf die Karosserie.

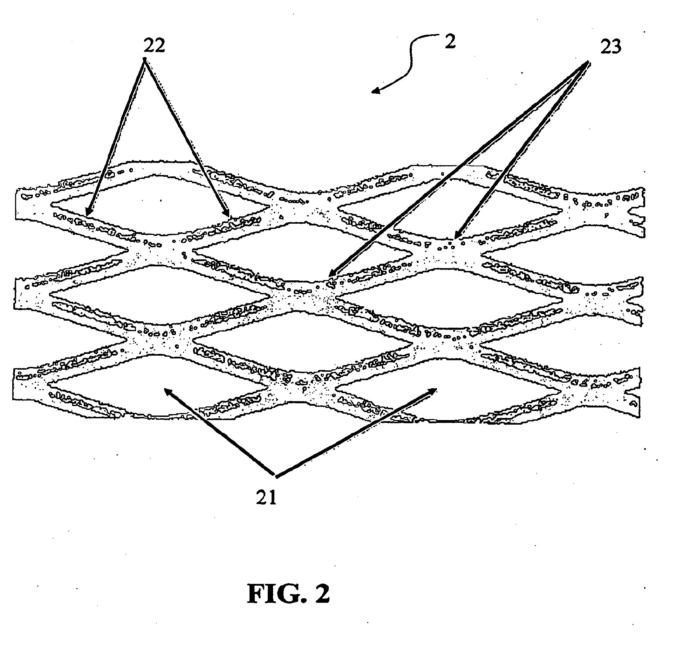

Die FIG. 2 zeigt eine Draufsicht eines in FIG. 1 und in der vorliegenden Erfindung verwendeten Einlage 13, welche in FIG. 2 eine Streckmetall-Lage 2 ist.

Erkennbar ist dabei der gitterförmige Aufbau der Streckmetall-Lage 2, wobei eine Vielzahl von Maschen 21 gebildet wird.

Die Maschen 21 werden durch Stege 22 gebildet, wobei im Kreuzungspunkt zwischen vieraneinander stoßenden Stegen 22 Knotenpunkte 23 gebildet werden.

Das Streckmetall 2 weist eine vorgebene Höhe h, wie sie bereits in FIG. 1 angesprochen wurde, zwischen den mindestens zwei äußeren Lagen 11 und 12 des Abschirmelements 1 auf.

Durch Variation einer entsprechenden Vorspannung des Streckmetalls 2 ergeben sich unterschiedliche Maschenweiten, Maschenlängen, Stegdicken, sowie Stegbreiten.

Mithilfe von definierten Vorspannungen des Streckmetalls 2 können verschiedene technische Anforderungen (Wärme-, Schall- und Schwingungsdämmung) im Motorbereich eines Kraftfahrzeuges erreicht werden.

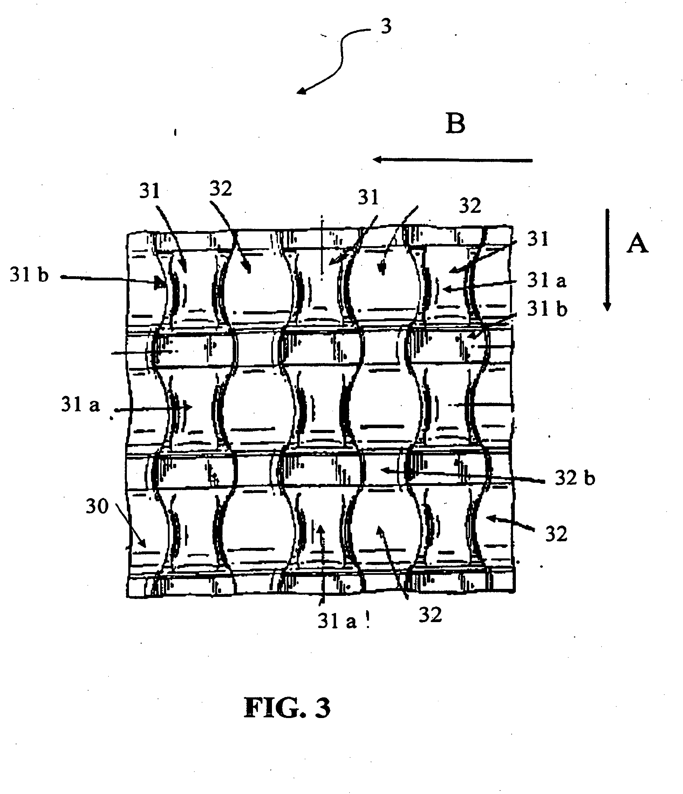

Die FIG. 3 zeigt eine schematische Draufsicht einer Ausführungsform eines Abschirmelementes 3 des Standes der Technik, welches keine koaxialen Öffnungen und kein Durchführungselement aufweist.

In FIG. 3 ist die Oberfläche der äußeren Lage 30 des Abschirmelements 3 sichtbar.

In der Darstellung weist die äußere Lage 30 eine Mehrzahl von im Wesentlichen parallelen, aufwärtsstehenden sich in eine Richtung erstreckende Rippen 31, die sich in eine erste Richtung (A) erstrecken, sowie eine Mehrzahl von im Wesentlichen aufwärtstehenden sich in eine zweite Richtung (B) erstreckende Wellungen 31b und 32b auf.

Die Breite der Rippen 31 entlang ihrer Länge variiert dabei. Die Breite der Wellungen 31b und 32 b bleibt im Wesentlichen konstant.

Dabei weisen die Rippen 31 im Bereich 31 a, wo die Rippen den geringsten Durchmesser aufweisen, die größte Höhe der Rippe 31 auf.

Hingegen weist im Bereich 31 b die Rippe 31 die geringste Höhe auf der äußeren Lage 30 des Abschirmelements 3 auf.

Die erste (A) und zweite (B) Richtung der Rippen 31 und Wellungen 31b und 32 b sind dabei um einen Winkel von wenigstens 10° geneigt, bevorzugt um 90° geneigt.

Desweiteren sind die maximalen und minimalen Höhen der Rückseite des Abschirmelements entgegensetzt ausgeführt, das heißt, ein Minimum auf der ersten äußeren Seite des Abschirmelements 3 weist ein Maximum auf der der ersten äußeren Seite abgewandten Seite des Abschirmelements 3 auf.

Durch diese Abfolge von Minima und Maxima ist beispielsweise eine Aufnahme der Rippen 31 der ersten äußeren Lage in den Vertiefungen der zweiten äußeren Lage möglich.

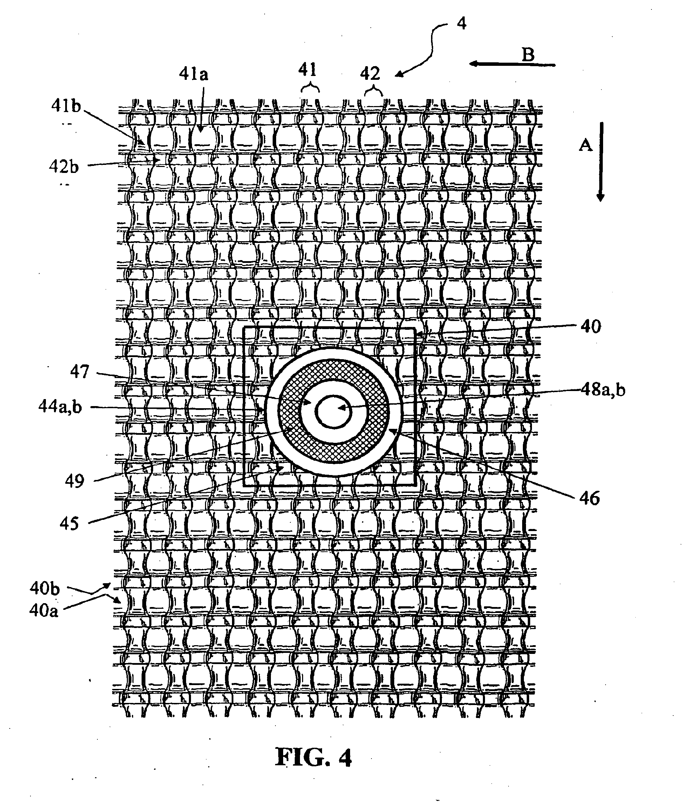

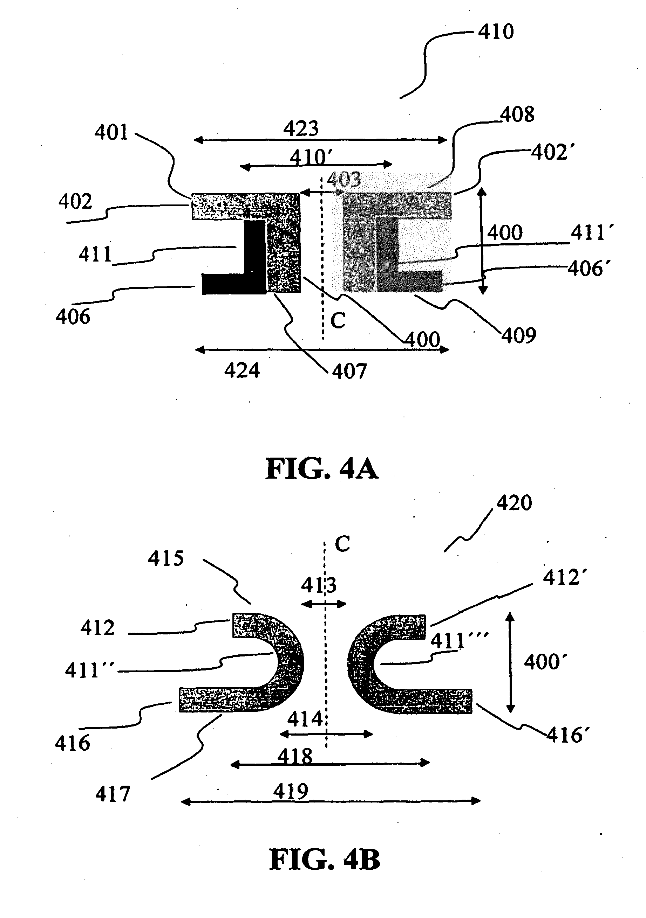

Die FIG. 4 zeigt eine Draufsicht eines Abschirmelements 4 der vorliegenden Erfindung mit koaxialen Öffnungen 44a, 44b der mindestens zwei äußeren Lagen 40a und 40b und der koaxialen Öffnung 48a der Einlage 49, welche eine gemeinsame Durchführung 48b bilden, in welcher ein Durchführungselement 47 aufgenommen ist.

Weiter sind bei der vorliegenden Erfindung die Öffnungen 44a und 44b der jeweils äußeren Lagen 40a, 40b größer als die Öffnung 48a der Einlage 49.

Hierdurch ergibt sich die Möglichkeit ein einoder mehrteiliges metallisches Durchführungselement 47 in der Öffnung 48a der Einlage 49 anzubringen ohne mit den äußeren Lagen 40a, 40b in Kontakt zu kommen, was ebenfalls zu einer verbesserten Wärme-, Schall- und Schwingungsdämmung führt.

In der Draufsicht ist die Oberfläche der äußeren Lage 40a des Abschirmelements 4 dargestellt.

Dabei weist die äußere Lage 40a eine Mehrzahl von im Wesentlichen parallelen, aufwärtsstehenden sich in eine Richtung erstreckende Rippen 41 auf, die sich in eine erste Richtung (A) erstrecken, sowie eine Mehrzahl von im Wesentlichen aufwärtstehenden sich in eine zweite Richtung (B) erstreckende Wellungen 41b und 42 b auf.

Die Breite der Rippen 41 entlang ihrer Länge variiert dabei. Die Breite der Wellungen 41b und 42 b bleibt im Wesentlichen konstant.

Dabei weisen die Rippen 41 im Bereich 41 a, wo die Rippen den geringsten Durchmesser aufweisen, die größte Höhe der Rippe 41 auf.

Hingegen weist im Bereich 41 b die Rippe 41 die geringste Höhe auf der äußeren Lage des Abschirmelements 4 auf.

Die erste und zweite Richtung der Rippen und Wellungen sind dabei um einen Winkel von wenigstens 10° geneigt, bevorzugt um 90° geneigt.

Die maximalen und minimalen Höhen der Rückseite des Abschirmelements 4 sind entgegensetzt ausgeführt, das heißt, ein Minimum auf der ersten äußeren Seite des Abschirmelements 4 weist ein Maximum auf der der ersten äußeren Seite abgewandten Seite des Abschirmelements 4 auf.

Durch diese Abfolge von Minima und Maxima ist beispielsweise eine Aufnahme der Rippen der ersten äußeren Lage 40a in den Vertiefungen der zweiten äußeren Lage 40b möglich.

Das Durchführungselement 47 ist dabei entweder ein- oder mehrteilig ausgeformt und zentriert in der Durchführung 48a der Einlage 49 angeordnet.

Des weiteren umfasst den Rand 45 der Öffnungen 44a und 44b der äußeren Lagen 40a, 40b ein fixiert oder lose umgebender Kragen 46.

Darüber hinaus erstreckt sich eine Einlage 49 im Zwischenbereich zwischen Kragen 46 und Durchführungselement im Wesentlichen parallel zu den übereinander liegenden äußeren Lagen.

Der Kragen 46 wird entsprechend mit dem Rand 45 der Öffnungen 44a, 44b der äußeren Lagen 40a, 40b fixiert verpresst, um den Zwischenbereich zwischen äußeren Lagen und Einlage zu festigen.

Dadurch ergibt sich eine mehr oder weniger starke Verpressung 40 rund um den Randbereich 45 der Öffnungen 44a und 44b der äußeren Lagen 40a und 40b des Abschirmelements 4.

Die zwischen den äußeren Lagen 40a und 40b angeordnete Einlage 49 des Abschirmelements 4 der vorliegenden Erfindung umfasst dabei mindestens eine Einlage, welche ein gitterförmiges Streckmetall oder ein Kunststoffgitter sein kann.

Die Einfügung der Einlage 49 verhindert eine entsprechende Wärme-, Schall- und Schwingungsübertragung vom Abschirmelement 4 auf das Durchführungselement 47 und deren Befestigungs-Mittel und damit in weiterer Folge auf die das Abschirmelement 4 umgebende Karosserie.

Das Durchführungselement erlaubt eine Verschraubung des Abschirmelements 4 durch das ein- oder mehrteilige metallische Durchführungselement 47 mit einem heißen Bauteil.

Des weiteren wirkt das ein- oder mehrteilige Durchführungselement 47 als ein Verpressungsbegrenzer.

Gemäß einer weiteren Ausführungsform der vorliegenden Erfindung kann der freigeschnittene Bereich der Öffnung 44a und 44b der äußeren Lagen 40a, 40b unterschiedlich groß sein und/oder auch unterschiedliche Formen aufweisen. Auf diese Weise kann das Schwingverhalten des Abschirmelements 4 gezielt beeinflusst und eingestellt werden.

Desweiteren kann die Maschengröße der Einlage 49 unterschiedliche Größen aufweisen, abhängig von einer entsprechend definierten Vorspannung der Einlage 49.

Dadurch kann die Wärmeübertragung vom Abschirmelement 4 zum Befestigungspunkt beeinflusst und ebenso das Schwingungsverhalten des Abschirmelements 4 angepasst werden.

Gemäß einem weiteren Aspekt der vorliegenden Erfindung kann die Verpressung des Durchführungselements 47 mit der Einlage 49 unterschiedlich stark ausgeführt sein.

Bei einer losen Verpressung des Durchführungselements 47 mit der Einlage 49 kann sich die Einlage 49 bei der Wärmeausdehnung des heißen Bauteils zusätzlich noch in dem Durchführungselement 47 bewegen bevor die Einlage 49 den restlichen Längenausgleich übernimmt.

Der Luffspalt zwischen dem Durchführungselement 47 und der Einlage ist individuell einstellbar und je nach Anwendungsfall zu wählen.

Des weiteren können durch eine lose Verpressung, welche eine Drehung und/oder longitudinale Verschiebung des Durchführungselements 47 entlang der Achse C erlaubt, spätere Montagejustierungen vorgenommen werden.

In FIG 4A ist eine seitliche schematische Schnittansicht einer Ausführungsform eines zweiteiligen Durchführungselements 410 gemäß der vorliegenden Erfindung dargestellt.

Das zweiteilige Durchführungelement 410 besteht dabei aus zwei Teilen. Aus einem Oberteil, welcher weniger stark gestreift dargestellt ist, und aus einem Unterteil, welcher stärker gestreift dargestellt ist.

Der Oberteil weist kann dabei im Querschnitt die Form eines auf dem Kopf stehenden "L" aufweisen. Der Unterteil weist im Querschnitt ebenfalls die Form ei-nes "L" auf, welches spiegelverkehrt ist und eine kleinere Querschnittsfläche aufweist.

Die Querschnittsform des oberen Teils weist eine obere Seite 408, die Seiten 402 und 400, sowie eine untere Seite 407 auf.

Die Querschnittsform des unteren Teils weist eine untere Seite 409, eine obere Seite 401, sowie die Seiten 406 und 411 auf.

Die Querschnittsformen des oberen und unteren Teil sind rotationssymmetrisch und ergeben bei Drehung um die Achse C das zweiteilige Durchführungselement 410.

Ebenso sind die Distanzen 410', 423 und 424 zwischen den Seiten 411 und 411', 402 und 402', sowie 406 und 406'dargestellt.

DieÖffnung403deszweiteiligen Befestigungselements entspricht der späteren Öffnung, durch welche ein Befestigungsmittel geführt werden kann, um das Abschirmelement wärme-, schall- und schwingungsdämpfend im Karosserieraum zu befestigen.

In FIG 4B ist eine seitliche schematische Schnittansicht einer Ausführungsform eines einteiligen Durchführungselements 420 gemäß der vorliegenden Erfindung dargestellt.

Das Durchführungelement 420 besteht dabei aus einem durchgehenden Teil.

Dabei weist die Ausformung des Durchführungselements 420 eine Querschnittsform auf, welche einen oberen Teil 415, einen unteren Teil 417, sowie die Seitenteile 411 " und 411"' umfasst.

Ebenso sind die Distanzen 414, 418 und 419 zwischen den Seiten 411" und 411"', 412 und 412', sowie 416 und 416' dargestellt.

Die Querschnittsform der FIG 4B ist rotationssymmetrisch und ergibt das einteilige Durchführungselement 420.

Die Öffnung 413 des einteiligen Befestigungselements entspricht der späteren Öffnung, durch welche ein Befestigungsmittel geführt werden kann, um das Abschirmelement wärme-, schall- und schwingungsdämpfend im Karosserieraum zu befestigen.

Die FIG. 5 zeigt eine schematische Seitenansicht einer Ausführungsform des Abschirmelements 5 mit zweiteiligem Durchführungselement 56.

Das Abschirmelement 5 der vorliegenden Erfindung umfasst dabei zwei äußere Lagen 51 und 52, die ein metallisches Material umfassen, bevorzugt Aluminium, Edelmetall, Edelstahl oder Al-beschichteten Edelstahl und dabei gleiche oder unterschiedliche Materialdicke aufweisen können.

Zwischen den äußeren Lagen erstreckt sich eine Einlage 53, welche ein gitterförmiges Streckmetall und/oder ein Kunststoffgitter sein kann, das unter definierter Vorspannung zwischen den äußeren Lagen 51 und 52 des Abschirmelements 5 angeordnet ist.

Die Querschnittsflächen der Öffnung der äußeren Lagen 51 und 52 und der Öffnung der Einlage 53 sind dabei unterschiedlich, wodurch das durch die Öffnung der Einlage 53 eingefügte Durchführungselement 56 mit den äußeren Lagen 51 und 52 nicht in Kontakt kommt.

Die einzelnen Kammern 54 der Einlage 53 bilden zwischen den einander zugewandten glatten Stirnflächen 51 a und 51b der äußeren Lagen 51 und 52 Luftpolster, die für eine entsprechende Wärme-, Schall- und Schwingungdämmung verantwortlich sind, wobei die Luftpolstermenge durch Variation des Abstandes h der beiden Stirnflächen 51a und 51b in Abhängigkeit vom Einsatzbereich vorgegeben werden kann.

Gemäß einer weiteren Ausführungsform kann die Oberfläche der äußeren Lagen 51 und 52 des Abschirmelements der vorliegenden Erfindung beliebig räumlich und flächig ausgeformt sein.

Gemäß einer weiteren Ausführungsform kann die Oberfläche der äußeren Lagen 51 und 52 des Abschirmelements der vorliegenden Erfindung wie die Oberfläche der in FIG. 3 und FIG. 4 dargestellten Ausführungsformen ausgeformt sein.

Darüber hinaus sind in FIG. 5 die koaxialen Öffnungen 510,520 und 530 der äußeren Lagen 51 und 52, sowie der Einlage 53 ersichtlich, welche eine gemeinsame Durchführung 50 b bilden, welches ein zweiteiliges Durchführungselement 56 aufnimmt.

Das Durchführungselement 56 ist dabei ein zweiteiliges Durchführungselement, kann aber auch ein mehrteiliges Durchführungselement sein, welches zentriert um eine Durchführung 50b der Einlage 53 verläuft,

Des weiteren wirken die Flächen 57 und 58 des mehrteilige Durchführungselements 56 als ein Verpressungsbegrenzer und erlauben eine entsprechende Festmachung des Abschirmelements im Karosserieraum, ohne unerwünschter Deformation der Einlage.

Der Stärkegrad der Verpressung des zweiteiligen Durchführungselements 56 wird durch eine Höhe 59 (h*) zwischen einem oberen Teilbereich 57 des Durchführungselements 56 und einem unteren Teilbereich 58 des Durchführungselements 56 charakterisiert, und führt, wie vorhergehend beschrieben, zu entsprechenden Wärme-, Schall- und Schwingungsdämmungs-Eigenschaften bei loser Verpressung.

Des weiteren können der obere Teilbereich 57 und der untere Teilbereich 58 des mehrteiligen Durchführungselements 56 in beliebiger Form und Materialstärke ausgeformt sein.

Die FIG. 6 zeigt eine weitere schematische Seitenansicht einer Ausführungsform eines Abschirmelements 6 mit einteiligem Durchführungselement 66.

Das Abschirmelement 6 der vorliegenden Erfindung umfasst dabei zwei äußere Lagen 61 und 62, die ein metallisches Material umfassen, bevorzugt Aluminium, Edelmetall, Edelstahl oder Al-beschichteten Edelstahl und dabei gleiche oder unterschiedliche Materialdicke aufweisen können.

Zwischen den äußeren Lagen erstreckt sich ei-ne Einlage 63, welche ein gitterförmiges Streckmetall mit definierter Vorspannung oder ein Kunststoffgitter sein kann.

Die Querschnittsflächen der Öffnung der äußeren Lagen 61 und 62 und der Öffnung der Einlage 63 sind dabei unterschiedlich, wodurch das durch die Öffnung der Einlage 63 eingefügte Durchführungselement 66 mit den äußeren Lagen 61 und 62 nicht in Kontakt zukommt.

Die einzelnen Kammern 64 des Einlage 63 bilden zwischen den einander zugewandten glatten Stirnflächen 61a und 61b der äußeren Lagen 61 und 62 Luftpolster, die für eine entsprechende Wärme-, Schall- und Schwingungdämmung verantwortlich sind, wobei die Luftpolstermenge durch Variation des Abstandes h der beiden Stirnflächen 61a und 61b in Abhängigkeit vom Einsatzbereich vorgegeben werden kann.

Gemäß einer weiteren Ausführungsform kann die Oberfläche der äußeren Lagen 61 und 62 des Abschirmelements 6 der vorliegenden Erfindung beliebig räumlich und flächenförmig ausgeformt sein.

Gemäß einer weiteren Ausführungsform kann die Oberfläche der äußeren Lagen 61 und 62 des Abschirmelements 6 der vorliegenden Erfindung wie die Oberfläche der in FIG. 3 und FIG. 4 dargestellten Ausführungsformen beschaffen sein.

Die koaxialen Öffnungen 610, 620 und 620 der äußeren Lagen 61 und 62, sowie der Einlage 63 bilden eine gemeinsame Durchführung 60b, in welcher ein einteiliges Durchführungselement 66 aufgenommen ist.

Des weiteren können der obere Teilbereich 67 und der untere Teilbereich 68 des Durchführungselements 66 in beliebiger Form und Materialstärke ausgeformt sein.

Des weiteren wirkt das ein- oder mehrteilige Durchführungselement 66 als ein Verpressungsbegrenzer, um die Einlage vor unerwünschter Verpressung zu schützen.

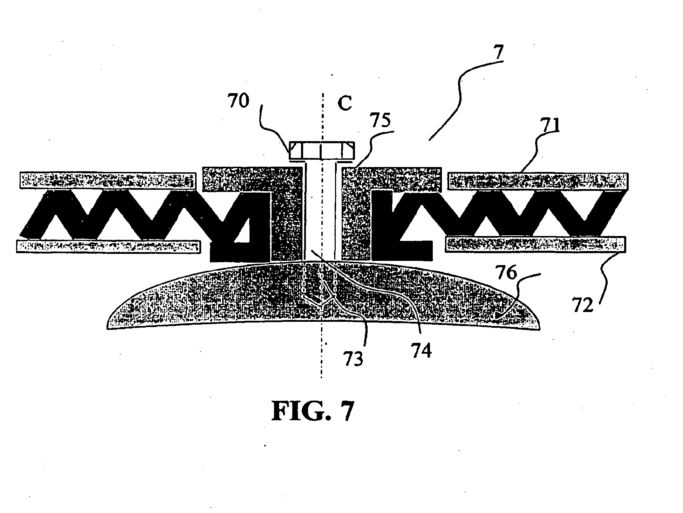

Die FIG. 7 zeigt eine schematische Seitenansicht einer Ausführungsform des Abschirmelements 7 der vorliegenden Erfindung, welches beispielsweise im Motorraum befestigt ist.

Das Abschirmelement 7 ist dabei mit einem mehrteiligen Durchführungselement 75 versehen, durch deren Öffnung 74 ein Befestigungsmittel 70, wie eine Schraube oder sonstiges Verbindungs-Mittel geführt werden kann, wodurch das Abschirmelement 7 an einer gewünschten Stelle 73 der Karosserie 76 befestigt werden kann.

Die obere Seite 71 des Abschirmelements 7 in FIG. 7 weist dabei auf eine Wärme- oder Schwingungsquelle. Ebenso kann auch die untere Seite 72 auf eine Wärme- oder Schwingungsquelle weisen.

Auf der entsprechend abgewandten Seite der Wärme- oder Schwingungsquelle kommt es somit zu einer entsprechend verbesserten Wärme-, Schall- und Schwingungsdämmung von einem heißen und/oder schwingenden Bauteil auf die umgebende Karosserieumgebung 76, wobei die Wärme-, Schall- und Schwingungsdämmung von der jeweils verwendeten Einlage (Material, Geometrie), den jeweiligen äußeren Lagen (Material, Geometrie), der Stärke der Verpressung des Durchführungselements mit der Einlage, dem Durchmesser der Durchführung, etc. abhängig ist.

In einer weiteren Ausführungform der vorliegenden Erfindung kann das Abschirmelement 7 ebenso mit einteiligem Durchführungselement 420 in der Nähe eines heißen Bauteils im Karosseriebereich 76 montiert werden.

## Patentansprüche

1. Abschirmelement (1) für Kraftfahrzeuge, insbesondere zur thermischen und/oder akustischen Abschirmung eines Wärme und/oder Schall abstrahlenden Bauteils, umfassend mindestens zwei beabstandete äußere Lagen (11, 12), zwischen denen eine Einlage (13) angeordnet ist, wobei die mindestens zwei beabstandeten äußeren Lagen (11, 12) und die Einlage (13) koaxiale Öffnungen (44a, 44b, 48a) aufweisen, die eine gemeinsame Durchführung (48b) bilden, in der ein Durchführungselement (47, 410, 420) aufgenommen bzw. gelagert ist, wobei die Öffnungen (44a, 44b) der jeweils äußeren Lagen (11, 12) eine größere Querschnittsfläche aufweisen als die Öffnung (48a) der Einlage (13), wobei das Durchführungselement (47, 410, 420) mit der Einlage (13) derart verbunden ist, dass kein Kontakt mit den äußeren Lagen (11, 12) gegeben ist,
**dadurch gekennzeichnet, dass** die Einlage (13) aus einem Metall- oder Kunststoffgitter besteht; und
dass das Durchführungselement (47, 410, 420) mit radialem Spiel mit der Einlage (13) verbunden ist, so dass es um eine Achse C drehbar gelagert ist.

2. Abschirmelement gemäß einem der vorhergehenden Ansprüche, **dadurch gekennzeichnet, dass** das Durchführungselement (47) ein einteiliges Durchführungselement (420) oder ein mehrteiliges Durchführungselement (410) ist.

3. Abschirmelement gemäß Anspruch 2, **dadurch gekennzeichnet, dass** das Durchführungselement (47, 420, 410) als Niet ausgebildet ist.

4. Abschirmelement gemäß Anspruch 3, **dadurch gekennzeichnet, dass** das Durchführungselement (47, 410, 420) die Einlage (13) im Randbereich der Öffnung (48a) umfasst.

5. Abschirmelement gemäß Anspruch 1, **dadurch gekennzeichnet, dass** die Einlage (13) aus einem Streckmetall gebildet ist und ein regelmäßiges Maschenwerk aufweist.

6. Abschirmelement gemäß einem der vorhergehenden Ansprüche, **dadurch gekennzeichnet, dass** die Einlage (13) aus Aluminium, Edelmetall, Edelstahl, Albeschichtetem Edelstahl oder deren Kombinationen besteht.

7. Abschirmelement gemäß einem der vorhergehenden Ansprüche, **dadurch gekennzeichnet, dass** die mindestens zwei äußeren Lagen (11, 12) sowie die mindestens eine Einlage (13) miteinander verbunden sind, indem jede äußere Lage in eine Mehrzahl von im Wesentlichen parallelen, aufwärts stehenden sich in eine erste Richtung (A) erstreckenden Rippen (31), die durch Vertiefungen (32) getrennt sind, geformt ist, wobei die Vertiefungen (32) der einen äußeren Lage (11) in den Rippen (31) der anderen äußeren Lage (12) aufgenommen sind.

8. Abschirmelement gemäß Anspruch 6, **dadurch gekennzeichnet, dass** die Vertiefungen der Rippen (31) rückspringende Seitenwände (31b) aufweisen und die Rippen (31) in der Breite entlang ihrer Länge variieren.

9. Abschirmelement gemäß Anspruch 7 oder 8, **dadurch gekennzeichnet, dass** sich Wellungen (31b, 32b) in eine zweite Richtung (B) erstrecken, die um einen Winkel von wenigstens 10° zu der ersten Richtung (A) geneigt sind und die Wellungen (31 b, 32b) in der Breite entlang ihrer Länge im Wesentlichen konstant sind.

10. Abschirmelement gemäß einem der vorhergehenden Ansprüche 7 bis 9, **dadurch gekennzeichnet, dass** der Winkel zwischen der Richtung (A) der Rippen (31) und der Richtung (B) der Wellungen (31b, 32b) im Wesentlichen 90° beträgt.

11. Abschirmelement gemäß einem der vorhergehenden Ansprüche, **dadurch gekennzeichnet, dass** die koaxialen Öffnungen (44a, 44b, 48a) im Wesentlichen im Querschnitt kreisförmig ausgeformt sind.

12. Abschirmelement gemäß einem der vorhergehenden Ansprüche, **dadurch gekennzeichnet, dass** ein erster (408) und/oder ein zweiter (407, 409) Teil des mehrteiligen Durchführungselements (410, 420) aus dem gleichen oder unterschiedlichem Material bestehen, welches aus der Gruppe von Aluminiumblech, Edelmetall, Edelstahl, Al-beschichtetem Stahl und deren Kombinationen gebildet ist.

13. Abschirmelement gemäß einem der vorhergehenden Ansprüche, **dadurch gekennzeichnet, dass** ein erster (408) und ein zweiter (409) Teil des mehrteiligen Durchführungselements (410) unterschiedliche Materialstärken aufweisen.

14. Abschirmelement gemäß einem der vorhergehenden Ansprüche, **dadurch gekennzeichnet, dass** die koaxialen Öffnungen (44a, 44b) der äußeren Lagen (11, 12) einen gleichen Durchmesser aufweisen.

15. Abschirmelement gemäß einem der vorhergehenden Ansprüche, **dadurch gekennzeichnet, dass** die äußeren Lagen (11, 12) ein metallisches Material, wie Aluminiumblech, Edelmetall, Edelstahl, Al-beschichteten Stahl oder deren Kombinationen umfassen.

16. Abschirmelement gemäß einem der vorhergehenden Ansprüche, **dadurch gekennzeichnet, dass** die äußeren Lagen (11, 12) mehrere Schichten metallischer Lagen umfassen, welche metallisches Material, wie Aluminiumblech, Edelmetall, Edelstahl, Al-beschichteten Stahl oder deren Kombinationen umfassen.

17. Abschirmeletrient gemäß einem der vorhergehenden Ansprüche, **dadurch gekennzeichnet, dass** die Materialstärken der ersten und/oder zweiten äußeren Lagen (11, 12) verschieden sind.

18. Abschirmelement gemäß einem der vorhergehenden Ansprüche, **dadurch gekennzeichnet, dass** mehrere Schichten von Einlagen (13) zwischen den mindestens zwei äußeren Lagen (11, 12) des Abschirmelements eingeschlossen sind.

## Claims

1. A screening element (1) for motor vehicles, in particular for thermal and/or acoustic screening of a heat and/or sound radiating component, comprising at least two separated outer layers (11, 12) between which an insert (13) is arranged, wherein the at least two separated outer layers (11, 12) and the insert (13) have coaxial openings (44a, 44b, 48a) which form a common opening (48b) in which a lead-in element (47, 410, 420) is received or mounted, wherein the openings (44a, 44b) of the respective outer layers (11, 12) have a larger cross-sectional area than the opening (48a) of the insert (13), wherein the lead-in element (47, 410, 420) is connected to the insert (13) in such a manner that there is no contact with the outer layers (11, 12),
**characterised in that** the insert (13) consists of a metal or plastic lattice; and
**in that** the lead-in element (47, 410, 420) is connected with radial clearance with the insert (13), so that it is mounted rotatably about an axis (C).

2. The screening element according to claim 1, **characterised in that** the lead-in element (47) is a single-part lead-in element (420) or a multi-part lead-in element (410).

3. The screening element according to claim 2, **characterised in that** the lead-in element (47, 420, 410) is designed as a rivet.

4. The screening element according to claim 3, **characterised in that** the lead-in element (47, 410, 420) contains said insert (13) in the margin of the opening (48a).

5. The screening element according to claim 1, **characterised in that** the insert (13) is formed from an expanded metal and has a regular mesh network.

6. The screening element according to one of the preceding claims, **characterised in that** the insert (13) consists of aluminium, noble metal, stainless steel, Al-coated stainless steel or their combinations.

7. The screening element according to one of the preceding claims, **characterised in that** the at least two outer layers (11, 12) and the at least one insert (13) are connected to each other, **in that** each outer layer is formed in a plurality of essentially parallel, upright ribs (31) extending in a first direction (A), which are separated by recesses (32), wherein the recesses (32) of the one outer layer (11) are received in the ribs (31) of the other outer layer (12).

8. The screening element according to claim 6, **characterised in that** the recesses of the ribs (31) have recoiling lateral walls (31 b) and the ribs (31) vary in the width along their length.

9. The screening element according to one of the preceding claims 7 or 8, **characterised in that** corrugations (31b, 32b) extend in a second direction (B) which are inclined by an angle of at least 10° to the first direction (A) and the corrugations (31 b, 32b) are essentially constant in the width along their length.

10. The screening element according to one of the preceding claims 7 to 9, **characterised in that** the angle between the direction (A) of the ribs (31) and the direction (B) of the corrugations (31b, 32b) is essentially 90°.

11. The screening element according to one of the preceding claims, **characterised in that** the coaxial openings (44a, 44b, 48a) are shaped in cross-section in an essentially circular manner.

12. The screening element according to one of the preceding claims, **characterised in that** a first (408) and/or a second (407, 409) section of the multi-part lead-in element (410, 420) consists of the same or different material which is formed from the group of sheet aluminium, noble metal, stainless steel, Al-coated steel and their combinations.

13. The screening element according to one of the preceding claims, **characterised in that** a first (408) and a second (409) section of the multi-part lead-in element (410) have different material thicknesses.

14. The screening element according to one of the preceding claims, **characterised in that** the coaxial openings (44a, 44b) of the outer layers (11, 12) have the same diameter.

15. The screening element according to one of the preceding claims, **characterised in that** the outer layers (11, 12) comprise a metal material such as sheet aluminium, noble metal, stainless steel, Al-coated stainless steel or their combinations.

16. The screening element according to one of the preceding claims, **characterised in that** the outer layers (11, 12) comprise a plurality of coats of metal layers which comprise material such as sheet aluminium, noble metal, stainless steel, Al-coated steel or their combinations.

17. The screening element according to one of the preceding claims, **characterised in that** the material thicknesses of the first and/or second outer layers (11, 12) are different.

18. The screening element according to one of the preceding claims, **characterised in that** several coats of inserts (13) are enclosed between the at least two outer layers (11, 12) of the screening element.

## Revendications

1. Elément de protection (1) pour véhicules automobiles, en particulier pour la protection thermique et/ou acoustique d'un composant rayonnant de la chaleur et/ou du bruit, comprenant au moins deux niveaux (11, 12) extérieurs espacés, entre lesquels est disposée une insertion (13), les au moins deux niveaux (11, 12) extérieurs espacés et l'insertion (13) présentant des ouvertures (44a, 44b, 48a) coaxiales, qui forment un passage (48b) commun, dans lequel un élément de passage (47, 410, 420) est logé et monté, les ouvertures (44a, 44b) des niveaux (11, 12) extérieurs respectifs présentant une surface de section plus grande que l'ouverture (48a) de l'insertion (13), l'élément de passage (47, 410, 420) étant relié à l'insertion (13), de telle sorte qu'il n'y a pas de contact avec les niveaux (11, 12) extérieurs,
**caractérisé en ce que** l'insertion (13) est à base d'une grille en métal ou d'une grille plastique ; et ce que l'élément de passage (47, 410, 420) est relié avec du jeu radial à l'insertion (13), de sorte qu'il est monté de façon à pouvoir tourner autour d'un axe (c).

2. Elément de protection selon la revendication 1, **caractérisé en ce que** l'élément de passage (47) est un élément de passage (420) d'un seul tenant ou un élément de passage (410) en plusieurs parties.

3. Elément de protection selon la revendication 2, **caractérisé en ce que** l'élément de passage (47, 420, 410) est conçu comme rivet.

4. Elément de protection selon la revendication 3, **caractérisé en ce que** l'élément de passage (47, 410, 420) comprend l'insertion (13) dans la zone périphérique de l'ouverture (48a).

5. Elément de protection selon la revendication 1, **caractérisé en ce que** l'insertion (13) est formée à base d'un métal étiré et présente un maillage régulier.

6. Elément de protection selon l'une quelconque des revendications précédentes, **caractérisé en ce que** l'insertion (13) est à base d'aluminium, de métal noble, d'acier inoxydable, d'acier inoxydable revêtu d'aluminium ou de leurs combinaisons.

7. Elément de protection selon l'une quelconque des revendications précédentes, **caractérisé en ce que** les au moins deux niveaux (11, 12) extérieurs et la au moins une insertion niveau (13) sont reliés les uns aux autres, par le fait que chaque niveau extérieur est formé par une pluralité de nervures (31) sensiblement parallèles, montant vers le haut et s'étendant dans une première direction (A), qui sont séparées par des cavités (32), les cavités (32) de l'un des niveaux (11) extérieurs étant réceptionnées dans les nervures (31) de l'autre niveau (12) extérieur.

8. Elément de protection selon la revendication 6, **caractérisé en ce que** les cavités des nervures (31) présentent des parois latérales (31b) en retrait et les nervures (31) varient dans la largeur le long de leur longueur.

9. Elément de protection selon la revendication 7 ou 8, **caractérisé en ce que** des ondulations (31b, 32b) s'étendent dans une seconde direction (B), lesquelles sont inclinées d'un angle d'au moins 10° par rapport à la première direction (A) et les ondulations (31b, 32b) sont sensiblement constantes dans la largeur le long de leur longueur.

10. Elément de protection selon l'une quelconque des revendications 7 à 9, **caractérisé en ce que** l'angle entre la direction (A) des nervures (31) et la direction (B) des ondulations (31b, 32b) est pour l'essentiel de 90°.

11. Elément de protection selon l'une quelconque des revendications précédentes, **caractérisé en ce que** les ouvertures (44a, 44b, 48a) coaxiales sont formées pour l'essentiel avec une forme circulaire en section.

12. Elément de protection selon l'une quelconque des revendications précédentes, **caractérisé en ce qu'**une première partie (408) et/ou une seconde partie (407, 409) de l'élément de passage (410, 420) en plusieurs parties sont à base du même matériau ou de matériau différent, qui est formé à partir du groupe comprenant tôle d'aluminium, métal noble, acier inoxydable, acier revêtu d'aluminium et leurs combinaisons.

13. Elément de protection selon l'une quelconque des revendications précédentes, **caractérisé en ce qu'**une première partie (408) et une seconde partie (409) de l'élément de passage (410) en plusieurs parties présentent différentes épaisseurs de matériau.

14. Elément de protection selon l'une quelconque des revendications précédentes, **caractérisé en ce que** les ouvertures (44a, 44b) coaxiales des niveaux extérieurs (11, 12) présentent un diamètre identique.

15. Elément de protection selon l'une quelconque des revendications précédentes, **caractérisé en ce que** les niveaux extérieurs (11, 12) comprennent un matériau métallique, tel que tôle d'aluminium, métal noble, acier inoxydable, acier revêtu d'aluminium ou leurs combinaisons.

16. Elément de protection selon l'une quelconque des revendications précédentes, **caractérisé en ce que** les niveaux extérieurs (11, 12) comprennent plusieurs couches de niveaux métalliques, qui comprennent du matériau métallique, tel que tôle d'aluminium, métal noble, acier inoxydable, acier revêtu d'aluminium ou leurs combinaisons.

17. Elément de protection selon l'une quelconque des revendications précédentes, **caractérisé en ce que** les épaisseurs de matériau des premiers et/ou des seconds niveaux (11, 12) extérieurs sont différentes.

18. Elément de protection selon l'une quelconque des revendications précédentes, **caractérisé en ce que** plusieurs couches d'insertions (13) sont enfermées entre les au moins deux niveaux (11, 12) extérieurs de l'élément de protection.
